# EUROPEAN PATENT APPLICATION

(11) **EP 4 524 848 A1**
(43) Date of publication of application: **19.03.2025**
(21) Application number: 24193049.4
(22) Date of filing: 06.08.2024
(51) Int. Cl.: G06Q 10/0631, G06Q 30/0645, G06Q 50/43

(54) **VEHICLE MANAGEMENT FACILITY INFORMATION PROVIDING METHOD AND VEHICLE MANAGEMENT FACILITY INFORMATION PROVIDING PROGRAM**

(30) Priority: 12.09.2023 JP 2023147720
(71) Applicant: FUJITSU LIMITED, Kawasaki-shi, Kanagawa 211-8588 (JP)
(72) Inventor: Nishiguchi, Yuki, Kawasaki-shi, Kanagawa, 211-8588 (JP); Kanemasa, Yasuhiko, Kawasaki-shi, Kanagawa, 211-8588 (JP)
(74) Representative: Hoffmann Eitle

(57) **Abstract**

A vehicle management facility information providing method implemented by a computer, the method including: specifying, as a reference facility, any one of a plurality of management facilities that manage unrented vehicles, based on input by a user; extracting, among the plurality of management facilities stored in a memory of the computer, one or more management facilities that exist within a predetermined range from the reference facility and of which a number of unrented vehicles being managed is to be changed, as one or more uneven distribution facilities; specifying, among the one or more uneven distribution facilities, an uneven distribution facility in which an advantage in a case where the user uses the uneven distribution facility matches an advantage emphasized by the user; and generating information that indicates the specified uneven distribution facility, and outputting the information to the user so that the information is viewable by the user.

## Description

### FIELD

The embodiment discussed herein is related to a vehicle management facility information providing method and a vehicle management facility information providing program.

### BACKGROUND

In recent years, services have emerged in which a vehicle such as an automobile, a bicycle, or an e-scooter is shared by a plurality of users. As forms of providing the service, there are a form called a "station-based type" and a form called a "free-float type". In a case of the station-based type, a user rents out a vehicle from a dedicated station (management facility) installed in a town and returns the vehicle to the same or different station after use. On the other hand, the free-float type allows a vehicle to be returned (dropped off) anywhere, including over road or the like.

In the case of the station-based type, since a return destination station is set in accordance with a user's desire, there is a risk that distribution of vehicles is biased (unevenly distributed) such that many vehicles are collected in a certain station and there are almost no vehicles in a certain station.

In this regard, there are known techniques for resolving uneven distribution of vehicles.

Japanese Laid-open Patent Publication Nos. 2016-95750 and 2021-60921 are disclosed as related art.

### SUMMARY

### TECHNICAL PROBLEM

In the related art, Japanese Laid-open Patent Publication No. 2016-95750 discloses a content in which a usage fee is reduced for a user who uses a shared vehicle in such a manner as to reduce an uneven distribution degree, and a usage fee is increased for a user who uses a shared vehicle in such a manner as to increase the uneven distribution degree. Japanese Laid-open Patent Publication No. 2021-60921 discloses a content in which a recommended route for resolving uneven distribution of vehicles is presented to a user, and an incentive is given to a user who has moved along the recommended route.

However, Japanese Laid-open Patent Publication Nos. 2016-95750 and 2021-60921 only disclose that a specific incentive is given to a user who has resolved uneven distribution of vehicles. For this reason, there is a possibility that a user who does not feel attractive to the specific incentive does not take an action for resolving the uneven distribution of the vehicles.

In one aspect, an object of the present disclosure is to provide a vehicle management facility information providing method and a computer-readable recording medium storing a vehicle management facility information providing program capable of effectively resolving uneven distribution of vehicles in a management facility that manages the vehicles.

### SOLUTION TO PROBLEM

According to an aspect of the embodiments, there is provided a vehicle management facility information providing method implemented by a computer, the method including: specifying, at a processor circuit of the computer, as a reference facility, any one of a plurality of management facilities that manage unrented vehicles, based on input by a user; extracting, at the processor circuit, among the plurality of management facilities stored in a memory of the computer, one or more management facilities that exist within a predetermined range from the reference facility and of which a number of unrented vehicles being managed is to be changed, as one or more uneven distribution facilities; specifying, at the processor circuit, among the one or more uneven distribution facilities, an uneven distribution facility in which an advantage in a case where the user uses the uneven distribution facility matches an advantage emphasized by the user; and generating, at the processor circuit, information that indicates the specified uneven distribution facility, and outputting the information to the user so that the information is viewable by the user.

### ADVANTAGEOUS EFFECTS OF INVENTION

Uneven distribution of vehicles in a management facility that manages the vehicles may be effectively resolved.

### BRIEF DESCRIPTION OF DRAWINGS

FIG. 1 is a diagram schematically illustrating a configuration of a vehicle sharing system according to an embodiment;
FIG. 2A is a diagram illustrating a hardware configuration of a vehicle management server, and FIG. 2B is a diagram illustrating a hardware configuration of a vehicle device;
FIG. 3 is a functional block diagram of the vehicle management server and the vehicle device;
FIG. 4 is a map illustrating a state in which stations are scattered;
FIG. 5A is a diagram illustrating a data structure of a user database (DB), FIG. 5B is a diagram illustrating a data structure of a station DB, and FIG. 5C is a diagram illustrating a data structure of a maintenance spot DB;
FIG. 6 is a flowchart (part 1) illustrating processing performed by the vehicle management server;
FIG. 7 is a flowchart (part 2) illustrating processing performed by the vehicle management server;
FIG. 8A is a diagram illustrating a state in which stations (reference stations) of a departure location and a destination are selected, and FIG. 8B is a diagram illustrating a state in which a standard route is searched;
FIG. 9 is a diagram illustrating predetermined ranges centered on stations;
FIG. 10 is a diagram for describing Modification Example 1 of a method for extracting an uneven distribution station;
FIG. 11 is a diagram for describing Modification Example 2 of a method for extracting an uneven distribution station;
FIG. 12 is a diagram illustrating uneven distribution stations and a maintenance spot;
FIG. 13A is a diagram illustrating a recommended route between the stations including a route between candidate stations, and FIG. 13B is a diagram illustrating a recommended route between the stations including a route between candidate stations;
FIG. 14 is a diagram illustrating a recommended route between the stations including a route between the candidate stations;
FIG. 15A is a diagram (part 1) illustrating an example of a screen presented to a user, and FIG. 15B is a diagram (part 2) illustrating an example of a screen presented to the user; and
FIG. 16 is a diagram (part 3) illustrating an example of a screen presented to the user.

### DESCRIPTION OF EMBODIMENTS

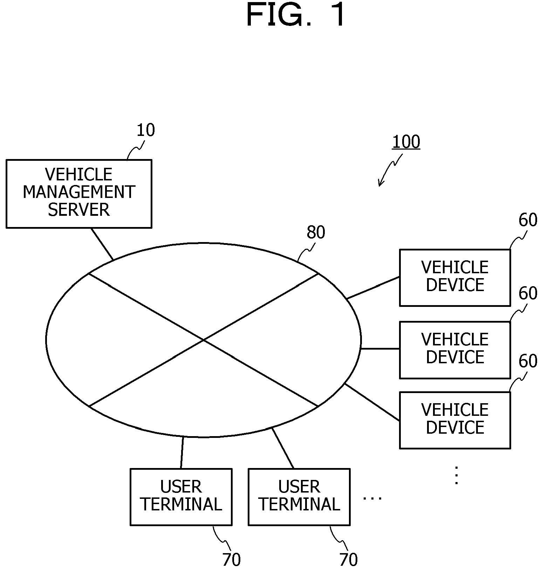

An embodiment will be described in detail below with reference to FIGs. 1 to 16. FIG. 1 schematically illustrates a configuration of a vehicle sharing system 100 according to an embodiment. The vehicle sharing system 100 according to the present embodiment is a system that provides a service (vehicle sharing service) that allows a plurality of users to share vehicles. Although an automobile, a bicycle, an e-scooter, and the like are assumed as the vehicle, in the present embodiment, it is assumed that the vehicle is a bicycle or an e-scooter on which a battery is mounted. Although forms of providing the vehicle sharing service include a form called a "station-based type" and a form called a "free-float type", the present embodiment is assumed to be the "station-based type". In a case of the "station-based type", a large number of stations (management facilities) are installed in a town, and a user rents out a vehicle from one of the stations. A user who uses a vehicle returns the vehicle to one of the stations.

As illustrated in FIG. 1, the vehicle sharing system 100 includes a vehicle management server 10, vehicle devices 60, and user terminals 70. The vehicle management server 10, the vehicle devices 60, and the user terminals 70 are coupled to a network 80 such as the Internet. The user terminal 70 is, for example, an information processing terminal such as a smartphone, and is a terminal held and used by a user who uses a service (rents a vehicle).

The vehicle management server 10 collects information from the vehicle device 60 or the user terminal 70, and provides the user terminal 70 with information on a station that manages unrented vehicles, information on a route between the stations, and the like based on information input to the user terminal 70 and the collected information.

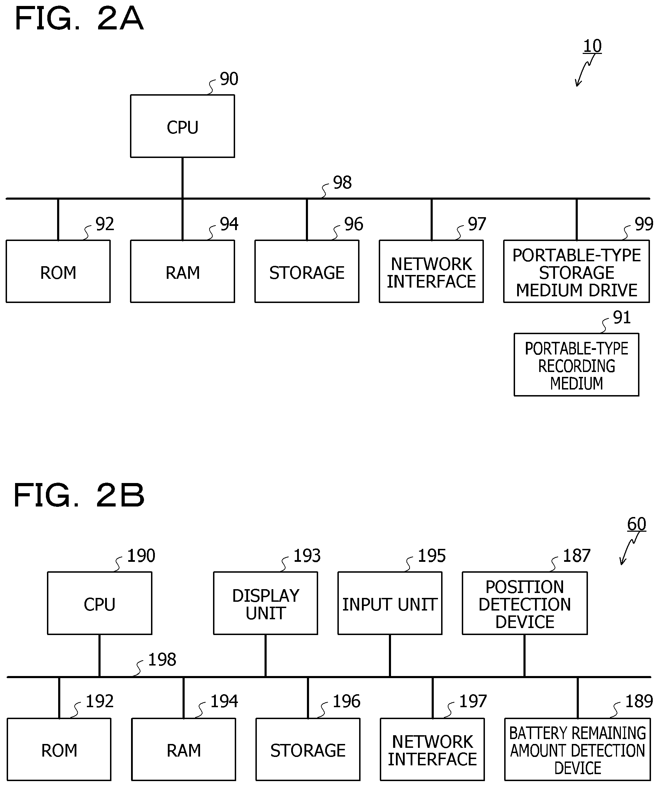

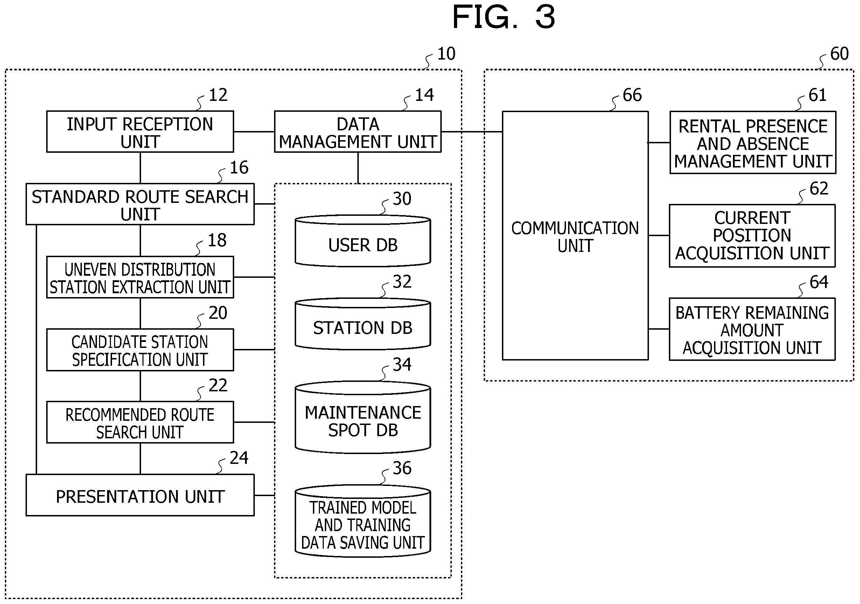

FIG. 2A illustrates a hardware configuration of the vehicle management server 10. As illustrated in FIG. 2A, the vehicle management server 10 includes a central processing unit (CPU) 90, a read-only memory (ROM) 92, a random-access memory (RAM) 94, a storage (for example, a solid-state drive (SSD), a hard disk drive (HDD), or the like) 96, a network interface 97, a portable-type storage medium drive 99, and the like. Each of these components of the vehicle management server 10 is coupled to a bus 98. In the vehicle management server 10, functions of each unit illustrated in FIG. 3 are realized by the CPU 90 executing a program (including a vehicle management facility information providing program) stored in the ROM 92 or storage 96, or a program read from a portable-type storage medium 91 by the portable-type storage medium drive 99. For example, the functions in FIG. 3 may be realized by an integrated circuit, such as an application-specific integrated circuit (ASIC) or a field-programmable gate array (FPGA). Details of each unit illustrated in FIG. 3 will be described later.

The vehicle device 60 is a device mounted on each vehicle shared by a plurality of users, acquires information on the vehicle, and transmits the acquired information to the vehicle management server 10. FIG. 2B illustrates a hardware configuration of the vehicle device 60. As illustrated in FIG. 2B, the vehicle device 60 includes a CPU 190, a ROM 192, a RAM 194, a storage 196, a network interface 197, a display unit 193, an input unit 195, a position detection device 187, a battery remaining amount detection device 189, and the like. Each of these components of the vehicle device 60 is coupled to a bus 198. The display unit 193 is a liquid crystal display or the like, and displays information (battery remaining amount or the like) of the vehicle. The position detection device 187 is a global navigation satellite system (GNSS) sensor or the like, and is a device that detects position information (latitude, longitude, and the like) of the vehicle. The battery remaining amount detection device 189 is a device that detects a remaining amount of a battery mounted on the vehicle.

FIG. 3 illustrates a functional block diagram of the vehicle management server 10 and the vehicle device 60. Hereinafter, functions of each of the vehicle management server 10 and the vehicle device 60 will be described.

### (Regarding Functions of Vehicle Management Server 10)

By the CPU 90 executing a program, the vehicle management server 10 functions as an input reception unit 12, a data management unit 14, a standard route search unit 16, an uneven distribution station extraction unit 18, a candidate station specification unit 20, a recommended route search unit 22, and a presentation unit 24. FIG. 3 also illustrates a user DB 30, a station DB 32, a maintenance spot DB 34, and a trained model and training data saving unit 36 stored in the storage 96 or the like.

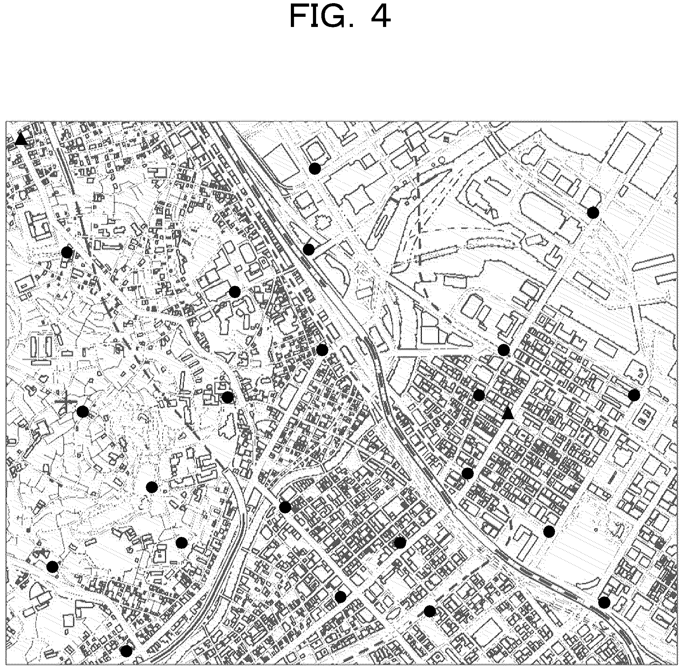

The input reception unit 12 receives input of information (route search condition or the like) input from the user terminal 70 and transfers the information to the standard route search unit 16. For example, the input reception unit 12 receives, from the user terminal 70 via the network 80 such as the Internet, a first signal being a digital signal that indicates the information such as the route search condition, and acquires the information from the received first signal by decoding the received first signal. In the present embodiment, as illustrated in a map in FIG. 4, it is assumed that stations that manage vehicles are scattered at positions indicated by black circles (•). A facility (maintenance spot) where maintenance of a vehicle is performed is assumed to be located at a position indicated by a black triangle (▲). At the maintenance spot, maintenance such as maintenance of a vehicle and charging and replacement of a battery is performed. A source of maps illustrated in FIG. 4 and other drawings is the website of the Geospatial Information Authority of Japan (https://maps.gsi.go.jp/).

It is assumed that a user displays the map illustrated in FIG. 4 over a screen of the user terminal 70, selects a station to be set as a departure location, selects a station to be set as a destination, and uses the selected stations as conditions for route search. Although it is assumed that the station set by the user as the departure location is a station closest to a current location of the user, the station is not limited thereto.

The data management unit 14 acquires information transmitted from the vehicle device 60, and updates the station DB 32 with the acquired information. For example, the data management unit 14 receives, from the vehicle device 60 via the network 80 such as the Internet, a second signal being a digital signal that indicates information generated by the vehicle device 60, and acquires the information from the received second signal by decoding the received second signal. The data management unit 14 acquires information input to the user terminal 70 by the user, use history information of related services and applications by the user, and the like, and updates the user DB 30 or stores the information in the trained model and training data saving unit 36. The data management unit 14 generates a trained model (details will be described later) for each user by using data (training data) of each user stored in the trained model and training data saving unit 36, and stores the trained model in the trained model and training data saving unit 36.

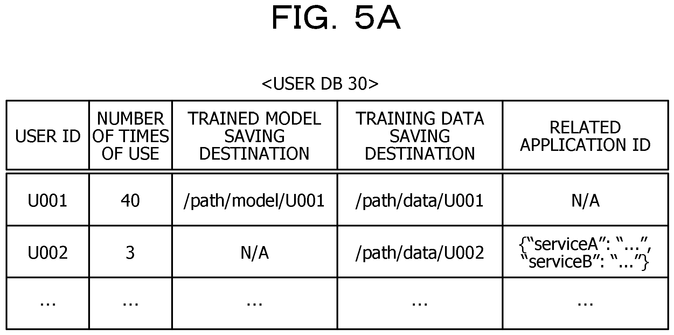

The user DB 30 is a database that manages information of a user who uses the service, and has a data structure as illustrated in FIG. 5A. For example, the user DB 30 stores each piece of information such as "user ID", "number of times of use", "trained model saving destination", "training data saving destination", and "related application ID". The "user ID" is identification information allocated to a user who uses the service. The "number of times of use" is a number of times each user has used the service, and a value of the number of times of use increases by 1 every time the user inputs information indicating that the user uses a vehicle from the user terminal 70. The "trained model saving destination" is an address indicating a saving destination of a trained model generated for each user. "N/A" is stored in a case where the trained model is not generated. The "training data saving destination" is an address indicating a saving destination of training data of each user. The "related application ID" is an ID of an application (for example, a health application) or an ID of a related service used by the user (installed in the user terminal 70).

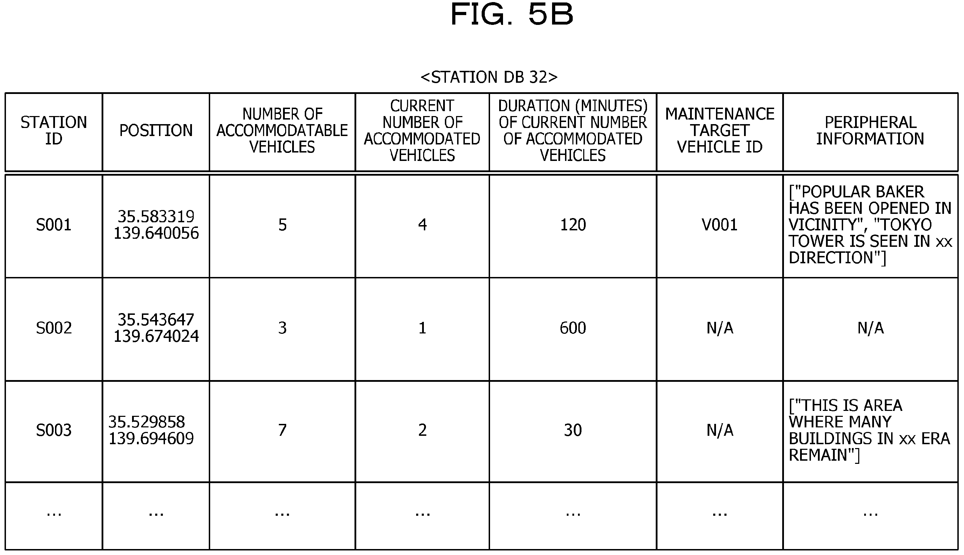

The station DB 32 is a database that manages information of each station, and has a data structure as illustrated in FIG. 5B. For example, the station DB 32 stores each piece of information such as "station ID", "position", "number of accommodatable vehicles", "current number of accommodated vehicles", "duration (minutes) of current number of accommodated vehicles", "maintenance target vehicle ID", and "peripheral information". The "station ID" is identification information allocated to each station. The "position" is position information (latitude and longitude) of each station. The "number of accommodatable vehicles" is a number of vehicles that may be simultaneously accommodated in each station. The "current number of accommodated vehicles" is a number of vehicles currently accommodated in each station. The "duration (minutes) of current number of accommodated vehicles" is a time elapsed after each station becomes the current state (after the current number of vehicles are accommodated). The "maintenance target vehicle ID" is identification information of a vehicle of which a battery has to be replaced. The "peripheral information" is information on a periphery of each station (information indicating what kind of sightseeing resource is present in the periphery or the like).

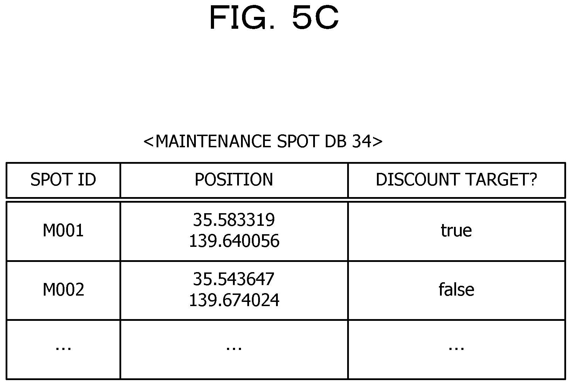

The maintenance spot DB 34 is a database that manages information of each maintenance spot, and has a data structure as illustrated in FIG. 5C. For example, the maintenance spot DB 34 stores each piece of information such as "spot ID", "position", and "discount target?". The "spot ID" is identification information allocated to each maintenance spot. The "position" is position information (latitude and longitude) of each maintenance spot. The "discount target?" column stores information indicating whether to discount a usage fee of a vehicle (true or false) in a case where the vehicle is returned to each spot.

Returning to FIG. 3, the trained model and training data saving unit 36 saves a trained model generated for each user, and saves training data of each user used when generating the trained model. Addresses of the "trained model saving destination" and the "training data saving destination" of the user DB 30 described above are addresses in the trained model and training data saving unit 36.

Based on the information received by the input reception unit 12, the standard route search unit 16 executes a route search. For example, the standard route search unit 16 searches for a route between a departure location station and a destination station input by the user, and sets the route as a standard route.

Among the stations existing in the vicinity of the departure location station input by the user, the uneven distribution station extraction unit 18 extracts, as an uneven distribution station, a station that accommodates a larger number of vehicles (is unevenly distributed) than other stations. Among the stations existing in the vicinity of the destination station input by the user, the uneven distribution station extraction unit 18 extracts, as an uneven distribution station, a station that accommodates a smaller number of vehicles (is unevenly distributed) than other stations.

Among the uneven distribution stations extracted by the uneven distribution station extraction unit 18, the candidate station specification unit 20 specifies stations (candidate stations) to be presented to the user. At the time of specifying the candidate stations, in a case where a trained model for the user exists, the candidate station specification unit 20 uses this trained model. In this case, a station that is highly likely to be used by the user is specified as the candidate station. The candidate station specification unit 20 may specify one of the maintenance spots as the candidate station.

The recommended route search unit 22 searches for a recommended route including a route between the candidate stations specified by the candidate station specification unit 20. The recommended route is a route connecting the departure location station and the destination station input by the user, and is a route in which the user moves along the route between the candidate stations by a vehicle and moves along the rest of the route by walking.

The presentation unit 24 generates a screen for displaying the standard route searched by the standard route search unit 16 and the recommended route searched by the recommended route search unit 22, and transmits the screen to the user terminal 70. At this time, the presentation unit 24 also displays information indicating what kind of advantage is provided to the user by selecting the recommended route on the screen. For example, the presentation unit 24 generates a third signal being a digital signal that indicates data for displaying the standard rout and the recommended route, and transmits the generated third signal to the user termina 70 via the network 80 such as the Internet, thereby the user terminal 70 receives the third signal via the network 80, acquires the data from the third signal by decoding the received third signal, and displays the standard rout and the recommended route based on the decoded third signal so that the standard rout and the recommended route are viewable by the user of the user terminal 70.

### (Regarding Functions of Vehicle Device 60)

As illustrated in FIG. 3, the vehicle device 60 functions as a rental presence and absence management unit 61, a current position acquisition unit 62, a battery remaining amount acquisition unit 64, and a communication unit 66 by the CPU 190 executing a program.

The rental presence and absence management unit 61 manages information on whether the user is using a vehicle (information on the presence and absence of rental). Upon detecting that the user has started or ended use of the vehicle, the rental presence and absence management unit 61 transmits the detected information to the data management unit 14 of the vehicle management server 10 via the communication unit 66.

The current position acquisition unit 62 acquires a current position of the vehicle from the position detection device 187 (see FIG. 2B), and transmits the current position to the data management unit 14 of the vehicle management server 10 via the communication unit 66. Based on the information on the rental presence and absence of each vehicle and the information on the current position of each vehicle, the data management unit 14 of the vehicle management server 10 confirms in which station each vehicle is accommodated. The data management unit 14 updates the "current number of accommodated vehicles" and the "duration of current number of accommodated vehicles" in the station DB 32 at any time.

The battery remaining amount acquisition unit 64 acquires information on a remaining amount of a battery mounted in the vehicle from the battery remaining amount detection device 189 (see FIG. 2B), and transmits the information to the data management unit 14 of the vehicle management server 10 via the communication unit 66. When there is a vehicle in which a remaining amount of a battery is low, the data management unit 14 stores a vehicle ID of the vehicle in the "maintenance target vehicle ID" column of a station (station accommodating the vehicles) corresponding to the current position of the vehicle in the station DB 32.

The communication unit 66 transmits the information acquired by the rental presence and absence management unit 61, the current position acquisition unit 62, and the battery remaining amount acquisition unit 64 to the data management unit 14 of the vehicle management server 10. For example, the communication unit 66 generates, as the second signal, a digital signal that indicates the information acquired by the rental presence and absence management unit 61, the current position acquisition unit 62, and the battery remaining amount acquisition unit 64, and transmits the generated second signal to the data management unit 14 of the vehicle management server 10 via the network 80.

### (Regarding Processing of Vehicle Management Server 10)

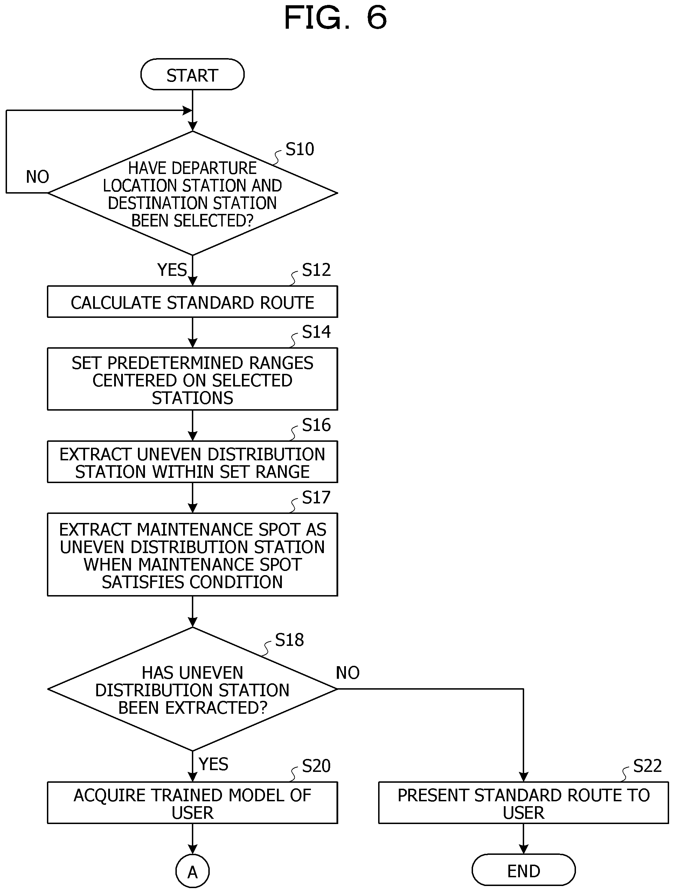

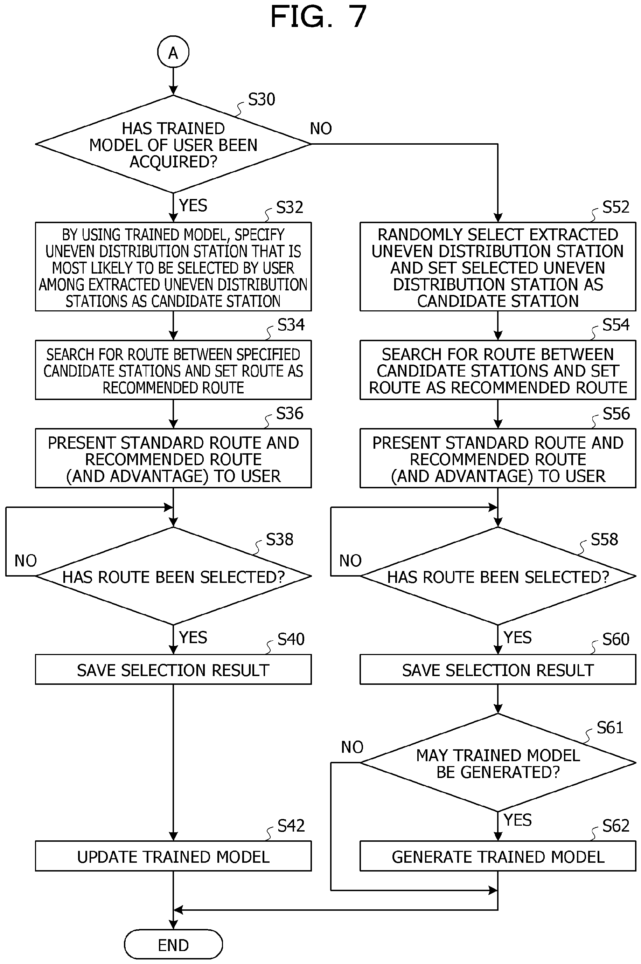

Hereinafter, processing of the vehicle management server 10 will be described in detail along with flowcharts of FIGs. 6 and 7 while appropriately referring to the other drawings. It is assumed that each time information is transmitted from the user terminal 70 or the vehicle device 60, the data management unit 14 of the vehicle management server 10 updates the user DB 30 or the station DB 32.

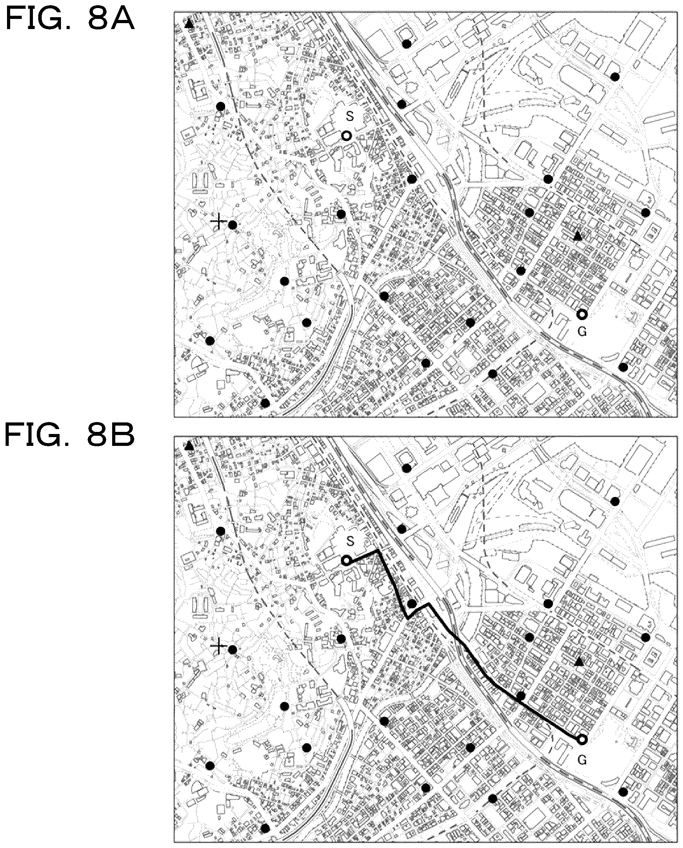

When processing illustrated in FIGs. 6 and 7 is started, first, in step S10, the input reception unit 12 waits until a departure location station and a destination station are selected. For example, it is assumed that the user selects stations Sand G indicated by white circles (o) over a map illustrated in FIG. 8A as a departure location station (Start) and a destination station (Goal), respectively. In this case, the determination in step S10 is affirmative, and the processing proceeds to step S12. The input reception unit 12 specifies the selected stations as reference stations.

After proceeding to step S12, the standard route search unit 16 searches for a route having the reference stations Sand G as a departure location and a destination, and sets the route as a standard route. FIG. 8B illustrates the searched standard route with a thick line.

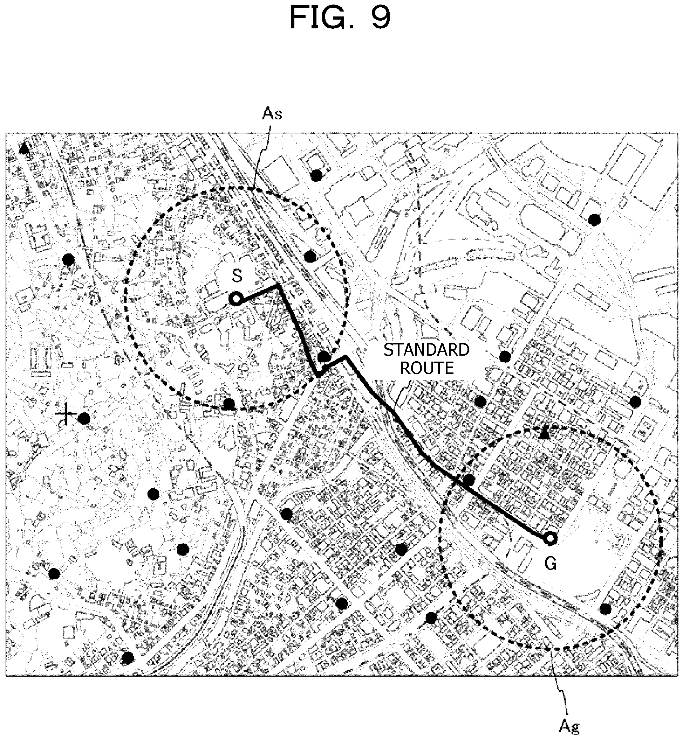

Next, in step S14, the uneven distribution station extraction unit 18 sets predetermined ranges centered on the selected stations (reference stations S and G). As illustrated in FIG. 9, it is assumed that ranges As and Ag indicated by circles having a predetermined radius centered on the stations Sand G, respectively, are set. The predetermined radius may be common to all users, or may be determined for each user based on an attribute (age, a number of usual steps, or the like) of the user. For example, in a case where the user's age is high or the number of usual steps is small, the predetermined radius may be reduced. The user's age may be specified from a birth date, an age, and the like input by the user at the time of registration of use of a service. The number of usual steps may be specified from a number of steps or the like measured by a specific application such as a health application installed in the user terminal 70.

Next, in step S16, the uneven distribution station extraction unit 18 extracts uneven distribution stations within the set ranges As and Ag. The uneven distribution station in the range As means a station that accommodates a large number of vehicles and of which the number of vehicles is to be decreased, and the uneven distribution station in the range Ag means a station that accommodates a small number of vehicles and of which the number of vehicles is to be increased. For example, the uneven distribution station extraction unit 18 refers to the station DB 32 and obtains an average value of accommodated vehicles in all stations. The uneven distribution station extraction unit 18 specifies the number of accommodated vehicles of each station existing in the range As, and extracts a station in which the specified number of accommodated vehicles is larger than the obtained average value, as the uneven distribution station. The uneven distribution station extraction unit 18 specifies the number of accommodated vehicles of each station existing in the range Ag, and extracts a station in which the specified number of accommodated vehicles is less than the average value, as the uneven distribution station.

However, the embodiment is not limited to this, and the uneven distribution station extraction unit 18 may extract the uneven distribution station in the following manner.

### (Modification Example 1 of Method for Extracting Uneven Distribution Station)

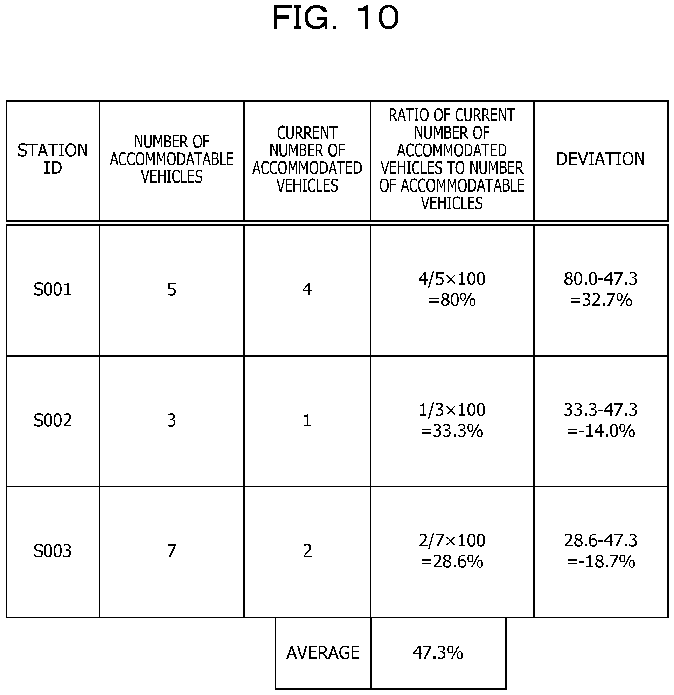

For example, it is assumed that stations with station IDs = S001 to S003 are present in the range As, and the number of accommodatable vehicles and the current number of accommodated vehicles of each station are the numbers of vehicles illustrated in FIG. 10. In this case, for each station, the uneven distribution station extraction unit 18 obtains a ratio of the current number of accommodated vehicles to the number of accommodatable vehicles. As a result, it is assumed that a ratio of the station S001 is 80.0%, a ratio of the station S002 is 33.3%, and a ratio of the station S003 is 28.6%. An average value of the ratios of all stations is assumed to be 47.3%. The uneven distribution station extraction unit 18 obtains a difference (deviation) between the obtained ratio and the average value. As a result, as illustrated in FIG. 10, it is assumed that a deviation of the station S001 is 32.7%, a deviation of the station S002 is -14.0%, and a deviation of the station S003 is -18.7%.

Assuming that a station of which the deviation is a positive value is a station having a large number of accommodated vehicles, the uneven distribution station extraction unit 18 extracts the station of which the deviation is a positive value as an uneven distribution station in the range As. The uneven distribution station extraction unit 18 may extract, as an uneven distribution station, a station of which a deviation is a positive value and an absolute value of the deviation is equal to or larger than a predetermined value.

By contrast, when the stations S001 to S003 in FIG. 10 are present in the range Ag, the uneven distribution station extraction unit 18 extracts, as an uneven distribution station, a station of which a deviation in the range Ag is a negative value (a station having a small number of accommodated vehicles). The uneven distribution station extraction unit 18 may extract, as an uneven distribution station, only a station of which a deviation is a negative value and an absolute value of the deviation is equal to or larger than a predetermined value.

### (Modification Example 2 of Method for Extracting Uneven Distribution Station)

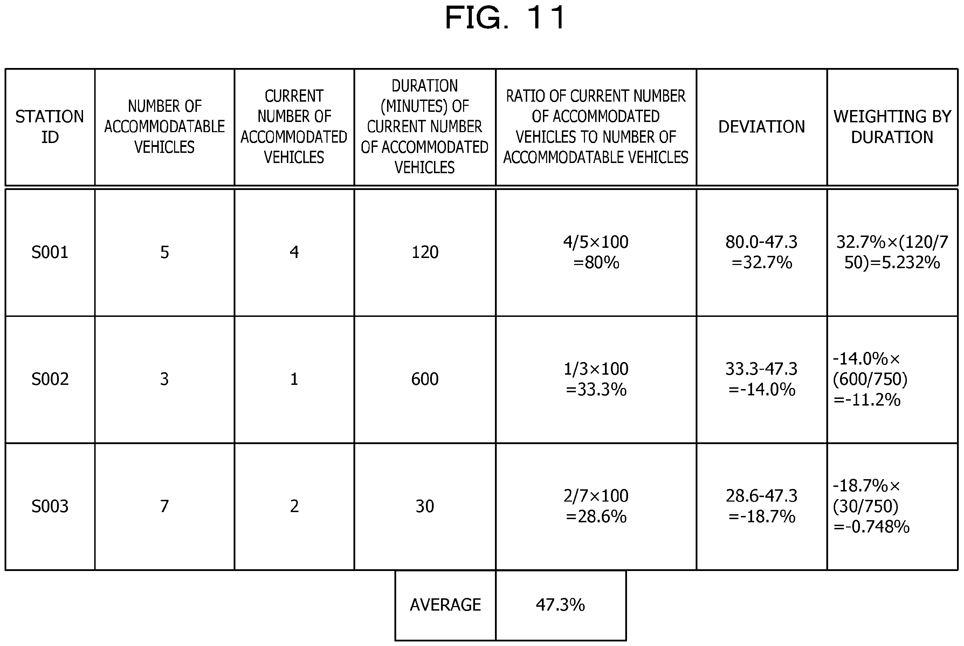

The uneven distribution station extraction unit 18 may weight the deviation obtained in Modification Example 1 described above with "duration of current number of accommodated vehicles", and specify the uneven distribution station based on the weighted value. For example, a value obtained by dividing the duration of current number of accommodated vehicles by a reference value (for example, 750) may be used as a weighting coefficient. A rightmost column in the table of FIG. 11 indicates a result of weighting the deviation by the duration. For example, in the range As, the uneven distribution station extraction unit 18 sets a station of which a deviation after weighting is a positive value and an absolute value of the deviation after weighting is equal to or larger than a predetermined value as an uneven distribution station. For example, in the range Ag, the uneven distribution station extraction unit 18 sets a station of which a deviation after weighting is a negative value and an absolute value of the deviation after weighting is equal to or larger than a predetermined value as an uneven distribution station.

### (Modification Example 3 of Method for Extracting Uneven Distribution Station)

For example, the uneven distribution station extraction unit 18 may extract an uneven distribution station by using an uneven distribution degree K(h) as disclosed in Japanese Laid-open Patent Publication No. 2016-95750.

The method for extracting the uneven distribution station is not limited to the examples described above, and the uneven distribution station may be extracted by another method (calculation method).

Even when a station is extracted as an uneven distribution station of which the number of accommodated vehicles is large (or small) by the method for extracting the uneven distribution station as described above, in some cases, it may be predicted that the uneven distribution will be resolved in the near future based on past tendencies, reservation information, and the like. A station in which the uneven distribution is expected to be resolved in the near future in this manner may be excluded from the uneven distribution station.

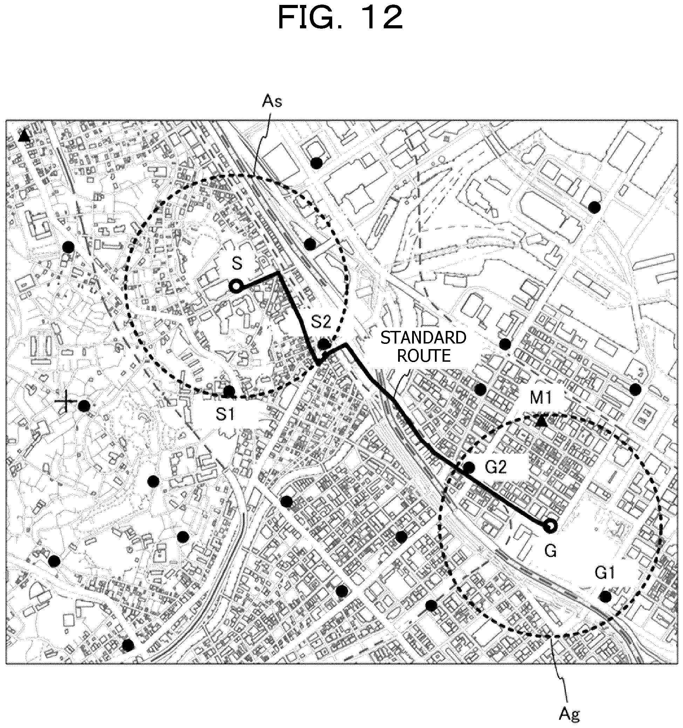

In the present embodiment, it is assumed that stations S1 and S2 illustrated in FIG. 12 are extracted as the uneven distribution stations in the range As, and stations G1 and G2 illustrated in FIG. 12 are extracted as the uneven distribution stations in the range Ag.

Next, in step S17, when a maintenance spot satisfies a predetermined condition, the uneven distribution station extraction unit 18 extracts the maintenance spot as an uneven distribution station. For example, in a case where there is a maintenance spot that is located in the range Ag and is a discount target by referring to the maintenance spot DB 34, the uneven distribution station extraction unit 18 extracts the maintenance spot as an uneven distribution station. A condition for extracting the maintenance spot as an uneven distribution station may be changed as appropriate. For example, the maintenance spot extracted as the uneven distribution station may be located outside the range Ag. In the present embodiment, it is assumed that a maintenance spot M1 illustrated in FIG. 12 is extracted as an uneven distribution station.

Returning to FIG. 6, in the next step S18, the candidate station specification unit 20 determines whether an uneven distribution station has been extracted in step S16. When the uneven distribution station has been extracted in at least one of the ranges As and Ag, the determination in step S18 is assumed to be affirmative. When the determination in step S18 is negative (when no uneven distribution station has been extracted), the processing proceeds to step S22. After proceeding to step S22, the presentation unit 24 transmits a screen (FIG. 8B) for displaying the standard route searched by the standard route search unit 16 to the user terminal 70, and displays the screen on the user terminal 70 to present the screen to the user. After that, the entire processing of FIGs. 6 and 7 ends.

By contrast, when the determination in step S18 is affirmative (when at least one uneven distribution station has been extracted), the processing proceeds to step S20. After proceeding to step S20, the candidate station specification unit 20 refers to the user DB 30 and acquires a trained model of the user from the trained model and training data saving unit 36.

After proceeding to step S30 in FIG. 7, the candidate station specification unit 20 determines whether a trained model of the user has been acquired. For example, it is determined whether a trained model of the user has already been generated. When the determination in step S30 is affirmative, the processing proceeds to step S32.

After proceeding to step S32, the candidate station specification unit 20 uses the trained model acquired in step S20 to specify, as a candidate station, an uneven distribution station that is most likely to be selected by the user among the extracted uneven distribution stations.

The trained model is a model that is generated for each user, and is used for specifying, as a candidate station, the uneven distribution station that is most likely to be used by the user among the uneven distribution stations extracted by the uneven distribution station extraction unit 18. By inputting information (information on whether there is peripheral information, position information, distance from a reference station, and the like) of each of the extracted uneven distribution stations to the trained model, candidate stations are output.

The trained model is generated by the data management unit 14 by using training data (feature amount) such as (1) to (4) below including a questionnaire to the user or profile information, a use history of related services and applications, an action history, and the like. A validity period may be set as appropriate for the training data to be used. For example, the trained model may be generated by using only training data collected within the latest one month.

### (1) Data Related to Exercise Habit And Health Awareness

For example, it is data such as data on the number of steps or exercise amount or usage of a health application.

### (2) Data Related to Reaction to New Spot or Event Information

For example, it is data such as a use history of shops in related services, a reaction rate to an advertisement, and a use frequency in a same area.

### (3) Data Related to Reaction to Economic Incentive

For example, it is data such as usage of coupons and points in related services.

### (4) Data Related to Past Route Selection

For example, it is data such as a selection history indicating what kind of advantageous route the user has selected in the past.

By using the training data as described above, the data management unit 14 generates a trained model for determining what kind of advantageous station each user selects by using a general-purpose machine learning method such as a neural network. Output examples (examples of specifying candidate stations) of the trained model will be described below.

### (Example 1)

For example, in a case where the user is a user who is highly interested in a new spot or an event or is a user during sightseeing, an uneven distribution station with which peripheral information is associated in the station DB 32 is specified as a candidate station. For example, in a case where peripheral information is associated with the uneven distribution stations S1 and G1 in FIG. 12, these stations S1 and G1 are specified as candidate stations.

### (Example 2)

For example, in a case where the user is lacking in exercise or is interested in exercise, an uneven distribution station located over or near a standard route (an uneven distribution station that forces the user to move on foot) is specified as a candidate station. For example, since the uneven distribution stations S2 and G2 in FIG. 12 are stations located over or near the standard route, these stations S2 and G2 are specified as candidate stations. The uneven distribution station that forces the user to move on foot may be specified as a candidate station even when the uneven distribution station is not located over or near the standard route.

### (Example 3)

For example, it is assumed that the user is a user who has a strong parsimony tendency. In this case, an uneven distribution station (for example, S2) in which a maintenance target vehicle (a vehicle with a low battery remaining amount) is accommodated and an uneven distribution station (for example, M1) that may discount a usage fee are specified as candidate stations.

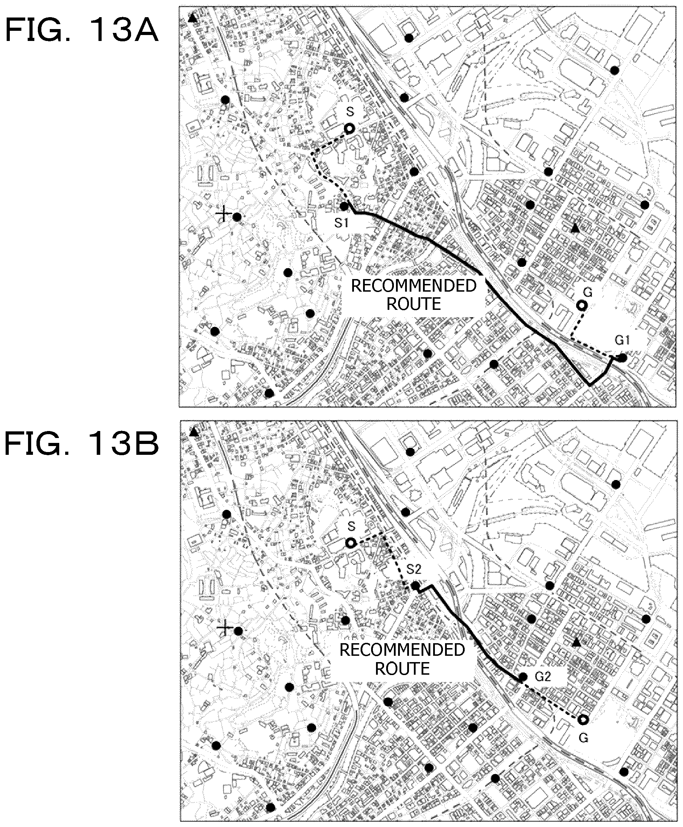

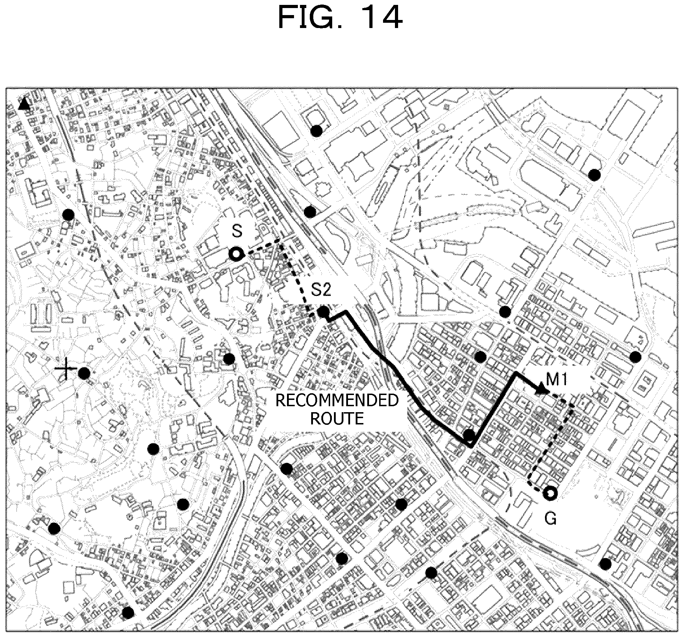

Returning to FIG. 7, when the processing proceeds to step S34, the recommended route search unit 22 searches for a route between the specified candidate stations, and sets a route between the stations Sand G including the searched route as a recommended route. For example, in a case where the uneven distribution stations S1 and G1 are specified as candidate stations as in the above (Example 1), a recommended route as illustrated in FIG. 13A is searched. It is assumed that a portion of the recommended route indicated by a broken line is a walking section, and a portion indicated by a solid line is a section in which the vehicle is used. For example, in a case where the uneven distribution stations S2 and G2 are specified as candidate stations as in the above (Example 2), a recommended route as illustrated in FIG. 13B is searched. For example, in a case where the uneven distribution station S2 and M1 are specified as candidate stations as in the above (Example 3), a recommended route as illustrated in FIG. 14 is searched.

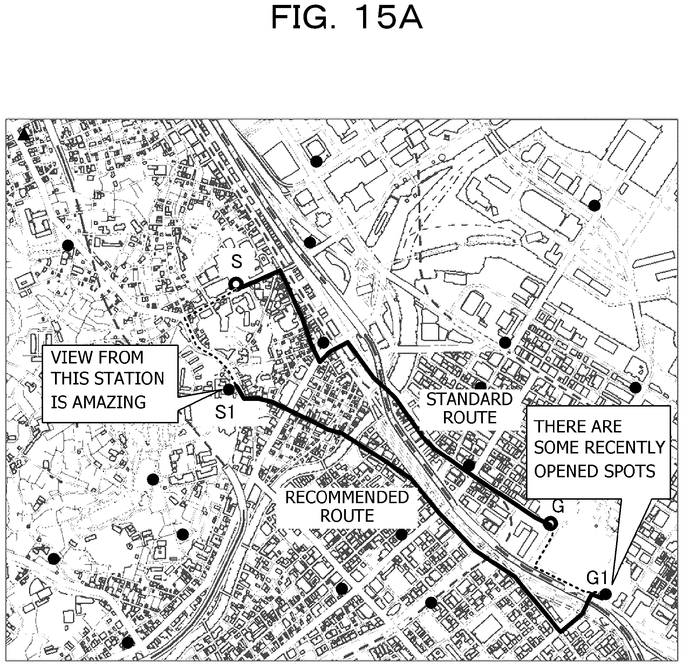

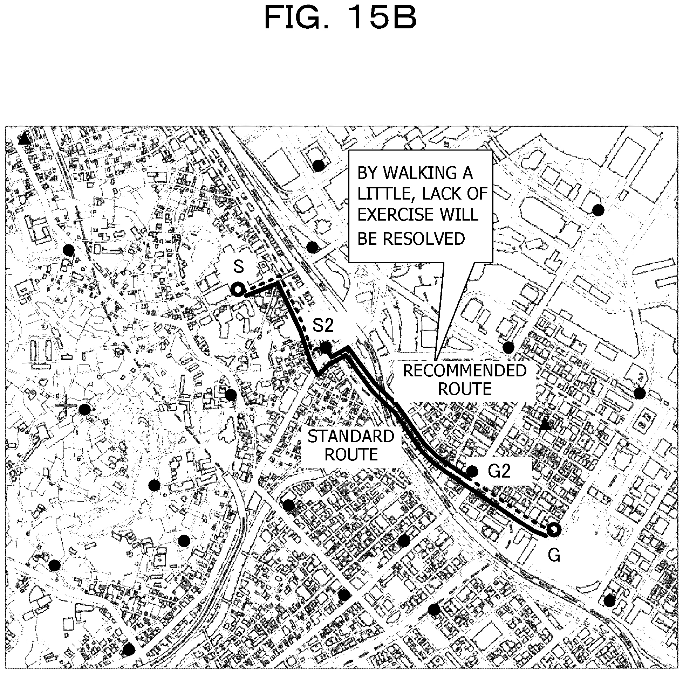

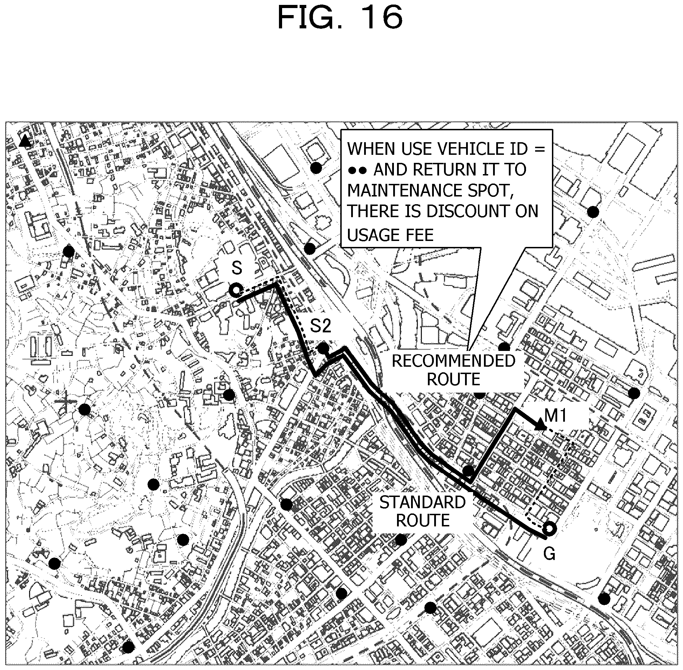

Next, in step S36, the presentation unit 24 presents the standard route and the recommended route (and an advantage) to the user. For example, in a case where the recommended route as illustrated in FIG. 13A is searched, the presentation unit 24 generates a screen that displays the standard route and the recommended route and that displays an advantage (peripheral information of the stations S1 and G1) in a case where the recommended route is selected, as illustrated in FIG. 15A. For example, in a case where the recommended route as illustrated in FIG. 13B is searched, the presentation unit 24 generates a screen that displays the standard route and the recommended route and that displays an advantage (indicating that the lack of exercise is resolved) in a case where the recommended route is selected, as illustrated in FIG. 15B. For example, in a case where the recommended route as illustrated in FIG. 14 is searched, the presentation unit 24 generates a screen that displays the standard route, the recommended route, and an advantage that there is a discount on the usage fee when a maintenance target vehicle is used and returned to a maintenance spot, as illustrated in FIG. 16. The presentation unit 24 transmits the generated screen to the user terminal 70. Each of the screens illustrated in FIGs. 15A to 16 enables the user to select either the standard route or the recommended route.

Next, in step S38, the data management unit 14 waits until a route is selected by the user. After either the standard route or the recommended route is selected by the user, the processing proceeds to step S40, and the data management unit 14 saves the selection result as training data in the trained model and training data saving unit 36.

Next, in step S42, the data management unit 14 updates a trained model by using the training data saved in the trained model and training data saving unit 36. After the processing up to step S42 is performed, all the processing illustrated in FIGs. 6 and 7 ends.

By contrast, when the determination in step S30 is negative, for example, when the trained model of the user has not been acquired in step S20 in FIG. 6 (the trained model has not been generated yet), the processing proceeds to step S52.

After proceeding to step S52, the candidate station specification unit 20 randomly selects the extracted uneven distribution station and sets the selected uneven distribution station as a candidate station. For example, the candidate station specification unit 20 randomly selects one of the uneven distribution stations S1 and S2, and randomly selects one of the uneven distribution stations G1, G2, and M1 to set the selected ones as candidate stations.

Next, in step S54, the recommended route search unit 22 searches for a route between the candidate stations and sets the route as a recommended route.

Next, in step S56, the presentation unit 24 presents the standard route and the recommended route (and an advantage) to the user.

Next, in step S58, the data management unit 14 waits until a route is selected by the user. After either the standard route or the recommended route is selected by the user, the processing proceeds to step S60, and the data management unit 14 saves the selection result as training data in the trained model and training data saving unit 36.

Next, in step S61, the data management unit 14 determines whether a trained model may be generated by using the training data of the user saved in the trained model and training data saving unit 36. For example, the data management unit 14 determines whether training data has been collected to such an extent that a trained model may be generated. When the determination in step S61 is affirmative, the processing proceeds to step S62, and the data management unit 14 generates a trained model by using the training data saved in the trained model and training data saving unit 36. After that, the entire processing of FIGs. 6 and 7 ends. In a case where the determination in step S61 is negative, all the processing of FIGs. 6 and 7 ends without going through step S62.

For a user who does not have a trained model, in steps S52, S54, and S56, routes of all combinations of the uneven distribution stations S1 and S2 and the uneven distribution stations G1, G2, and M1 may be presented as the recommended routes.

As described in detail above, according to the present embodiment, the input reception unit 12 sets one of stations that manage unrented vehicles as a reference station (S) based on input by a user. The uneven distribution station extraction unit 18 extracts, as uneven distribution stations, stations that exist within the predetermined range As from the reference station, that have a large number of vehicles, and of which the number of vehicles is to be decreased. Among the uneven distribution stations, the candidate station specification unit 20 specifies, as a candidate station, an uneven distribution station in which an advantage in a case where a vehicle is rented at the uneven distribution station matches an advantage emphasized by the user. The presentation unit 24 presents information on the specified candidate station (recommended route passing through the candidate station) to the user. In the present embodiment, it is possible to present, to the user, information on an uneven distribution station having the advantage emphasized by the user (an advantage that matches the user's preference), for example, information on an uneven distribution station that is highly likely to be used by the user. Accordingly, use of a vehicle accommodated in the uneven distribution station is promoted, and an uneven distribution state of the vehicles between the stations may be relieved.

According to the present embodiment, the input reception unit 12 sets one of stations that manage unrented vehicles as a reference station (G) based on the input by the user. The uneven distribution station extraction unit 18 extracts, as uneven distribution stations, stations that exist in the predetermined range Ag from the reference station, that have a small number of vehicles, and of which the number of vehicles is to be increased. Among the uneven distribution stations, the candidate station specification unit 20 specifies, as a candidate station, an uneven distribution station in which an advantage in a case where a vehicle is returned at the uneven distribution station matches the advantage emphasized by the user. The presentation unit 24 presents information on the specified candidate station (recommended route passing through the candidate station) to the user. In the present embodiment, it is possible to present, to the user, information on an uneven distribution station having the advantage emphasized by the user (an advantage that matches the user's preference), for example, information on an uneven distribution station that is highly likely to be used by the user. Accordingly, return of the vehicle to the uneven distribution station is promoted, and an uneven distribution state of the vehicles between the stations may be relieved.

In the present embodiment, the data management unit 14 generates a trained model by using training data such as information on whether the user has used the uneven distribution station presented to the user in the past, a result of a questionnaire to the user, profile information, and a use history of related services and applications. By using the trained model, the candidate station specification unit 20 specifies an uneven distribution station that is highly likely to be used by the user, and presents information on the specified uneven distribution station to the user. Accordingly, it is possible to specify the uneven distribution station that is highly likely to be used by the user with high accuracy. By presenting the uneven distribution station that is highly likely to be used by the user to the user, it is possible to effectively relieve the uneven distribution state of the vehicles between the stations.

In the present embodiment, in a case where the trained model of the user has not been generated, the uneven distribution station is randomly selected, and information on the selected uneven distribution station is presented to the user. Accordingly, at a stage where the trained model of the user has not been generated, it is possible to uniformly present, to the user, information on the uneven distribution station at which various advantages occur. In this case, it is possible to generate a trained model with high accuracy by using information on whether the user has used the presented uneven distribution station.

In the present embodiment, the uneven distribution station extraction unit 18 determines whether each station is an uneven distribution station based on the number of unrented vehicles currently managed by each station (current number of accommodated vehicles). Accordingly, it is possible to determine whether the station is an uneven distribution station by an appropriate method. By determining whether the station is an uneven distribution station based on the prediction result of the change in the number of accommodated vehicles in each station, it is possible to avoid presenting, to the user, information on a station that is predicted to no longer be an uneven distribution station in the near future.

In the present embodiment, a maintenance spot of vehicles may be set as an uneven distribution station. Accordingly, by giving an incentive such as a discount on the usage fee to the user, it is possible to cause the user to transport the used vehicle (vehicle that is desired to be maintained) to the maintenance spot. By doing so, it is possible to reduce the labor for maintenance of a service provider or the like.

In the present embodiment, when a recommended route is presented to a user, an advantage in a case where the recommended route is selected is presented. Accordingly, the user may determine which one of the standard route and the recommended route is to be selected while referring to the advantage of the recommended route.

Although a case where a user selects a station (S) serving as a starting point and a station (G) serving as a destination has been described in the above embodiment, the embodiment is not limited thereto. When a user inputs a current location and a destination, the input reception unit 12 may search for a station closest to the current location and a station closest to the destination, and specify the searched stations as reference stations (reference facilities).

Although a case where a user performs a route search has been described in the above embodiment, the embodiment is not limited thereto. In a case where a user searches for a station located at a position closest to a current location, information on the station located at the closest position may be presented, and information on an uneven distribution station that is not located at the closest position but has an advantage when used may be presented to the user.

Although, it is presented in the above embodiment that a trained model is used in a case where a candidate station is specified from uneven distribution stations, the embodiment is not limited thereto. For example, in a case where it is known what kind of advantageous station the user will select by using a questionnaire or the like in advance, information on an uneven distribution station having the same advantage as the advantage may be presented.

In the above embodiment, a case where a vehicle with a low battery remaining amount is brought to a maintenance spot has been described. However, the embodiment is not limited thereto, and another vehicle (for example, a vehicle in which air pressure slightly decreases, a vehicle for which a battery usage period is long, a vehicle for which a predetermined period or longer has elapsed since the previous maintenance, or the like) may be brought to the maintenance spot.

The above processing functions may be realized by a computer. In this case, a program is provided that describes processing contents of the functions to be included in a processing device. The above processing functions are realized by the computer by executing the program over the computer. The program that describes the processing contents may be recorded on a computer-readable recording medium (except for a carrier wave).

In a case of distributing the program, the program is sold in the form of, for example, a portable-type recording medium such as a Digital Versatile Disc (DVD) or a compact disc read-only memory (CD-ROM) on which the program is recorded. The program may be stored in a storage device of a server computer and transferred from the server computer to another computer via a network.

For example, the computer for executing the program stores in its own storage device the program recorded in the portable-type recording medium or the program transferred from the server computer. The computer reads the program from its own storage device and executes processing in accordance with the program. The computer may also read the program directly from the portable-type recording medium and execute processing in accordance with the program. Each time when the program is transferred from the server computer, the computer may execute processing in accordance with the received program.

The above-described embodiment is an example of a preferred embodiment of the present disclosure. However, the embodiment is not limited thereto, and various modifications may be made within a scope not departing from the gist of the present disclosure.

The following appendices are further disclosed in relation to the description of the above embodiment.

## Claims

1. A vehicle management facility information providing method implemented by a computer, the method comprising:
specifying, at a processor circuit of the computer, as a reference facility, any one of a plurality of management facilities that manage unrented vehicles, based on input by a user;
extracting, at the processor circuit, among the plurality of management facilities stored in a memory of the computer, one or more management facilities that exist within a predetermined range from the reference facility and of which a number of unrented vehicles being managed is to be changed, as one or more uneven distribution facilities;
specifying, at the processor circuit, among the one or more uneven distribution facilities, an uneven distribution facility in which an advantage in a case where the user uses the uneven distribution facility matches an advantage emphasized by the user; and
generating, at the processor circuit, information that indicates the specified uneven distribution facility, and outputting the information to the user so that the information is viewable by the user.

2. The vehicle management facility information providing method according to claim 1, wherein
the one or more uneven distribution facilities include, among the plurality of management facilities, the one or more management facilities that exist within the predetermined range from the reference facility and of which the number of unrented vehicles is to be decreased, and
the specifying of the uneven distribution facility includes specifying, among the one or more uneven distribution facilities stored in the memory, an uneven distribution facility in which an advantage in a case where the user rents a vehicle in the uneven distribution facility matches the advantage emphasized by the user.

3. The vehicle management facility information providing method according to claim 1, wherein
the one or more uneven distribution facilities include, among the plurality of management facilities stored in the memory, the one or more management facilities that exist within the predetermined range from the reference facility and of which the number of unrented vehicles is to be increased, and
the specifying of the uneven distribution facility includes specifying, among the one or more uneven distribution facilities stored in the memory, an uneven distribution facility in which an advantage in a case where the user returns a vehicle in the uneven distribution facility matches the advantage emphasized by the user.

4. The vehicle management facility information providing method according to claim 1, wherein
by using a trained model generated based on at least one of information on whether the user has used the uneven distribution facility presented in past, information on the user input by the user, and information on an action history of the user, the uneven distribution facility in which the advantage in a case where the user uses the uneven distribution facility matches the advantage emphasized by the user is specified among the one or more uneven distribution facilities.

5. The vehicle management facility information providing method according to claim 4, wherein
in a case where the trained model has not been generated, information on at least one of the uneven distribution facilities is presented to the user.

6. The vehicle management facility information providing method according to claim 1, wherein
the one or more management facilities extracted as the one or more uneven distribution facilities are determined based on the number of unrented vehicles that are managed by each of the plurality of management facilities.

7. The vehicle management facility information providing method according to claim 6, wherein
the one or more management facilities extracted as the one or more uneven distribution facilities are determined based on a result of predicting a change in the number of unrented vehicles managed in each of the plurality of management facilities.

8. The vehicle management facility information providing method according to claim 1, wherein
as the one or more uneven distribution facilities, a maintenance facility that satisfies a predetermined condition is selected among maintenance facilities that perform maintenance of the vehicle.

9. The vehicle management facility information providing method according to claim 1, wherein
the specifying of the reference facility includes specifying one of the plurality of management facilities as a reference facility based on a route search condition input by the user.

10. The vehicle management facility information providing method according to claim 1, wherein the outputting of the information to the user includes outputting an advantage in a case where the uneven distribution facility is used together with the information that indicates the specified uneven distribution facility.

11. A vehicle management facility information providing program comprising instructions which, when executed by a computer, case the computer to perform processing comprising:
specifying, at a processor circuit of the computer, as a reference facility, any one of a plurality of management facilities that manage unrented vehicles, based on input by a user;
extracting, at the processor circuit, among the plurality of management facilities stored in a memory of the computer, one or more management facilities that exist within a predetermined range from the reference facility and of which a number of unrented vehicles being managed is to be changed, as one or more uneven distribution facilities;
specifying, at the processor circuit, among the one or more uneven distribution facilities, an uneven distribution facility in which an advantage in a case where the user uses the uneven distribution facility matches an advantage emphasized by the user; and
generating, at the processor circuit, information that indicates the specified uneven distribution facility, and outputting the information to the user so that the information is viewable by the user.
